# EUROPEAN PATENT SPECIFICATION

(11) **EP 4 354 058 B1**
(45) Date of publication and mention of the grant of the patent: **14.05.2025**
(21) Application number: 22847907.7
(22) Date of filing: 24.04.2022
(51) Int. Cl.: H05B 6/50, H05B 6/62, H05B 6/68, F25D 29/00, F25D 23/10

(54) **HEATING METHOD, AND REFRIGERATING AND FREEZING APPARATUS**
HEIZVERFAHREN UND KÜHL- UND GEFRIERVORRICHTUNG
PROCÉDÉ DE CHAUFFAGE, ET APPAREIL DE RÉFRIGÉRATION ET DE CONGÉLATION

(30) Priority: 28.07.2021 CN 202110859060
(43) Date of publication of application: 17.04.2024
(73) Proprietor: Qingdao Haier Refrigerator Co., Ltd., Laoshan District Qingdao Shandong 266101 (CN); Haier Smart Home Co., Ltd., Qingdao, Shandong 266101 (CN)
(72) Inventor: ZHAO, Yanfeng, Qingdao, Shandong 266101 (CN); ZHU, Xiaobing, Qingdao, Shandong 266101 (CN); LI, Chunyang, Qingdao, Shandong 266101 (CN); WANG, Ming, Qingdao, Shandong 266101 (CN); HAN, Zhiqiang, Qingdao, Shandong 266101 (CN); AI, Jinghai, Qingdao, Shandong 266101 (CN)
(74) Representative: Ziebig Hengelhaupt Intellectual Property Attorneys Patentanwaltskanzlei PartGmbB
(86) International application number: PCT/CN2022/088793
(87) International publication number: WO 2023/005289

(56) References cited:
- CN-A- 101 940 351
- CN-A- 108 076 552
- CN-A- 108 153 182
- CN-A- 109 000 419
- CN-A- 109 845 949
- CN-A- 112 799 446
- CN-B- 108 153 182
- CN-U- 209 893 782
- US-A1- 2015 118 368
- US-A1- 2019 191 500
- US-A1- 2020 084 844

## Description

### FIELD OF THE INVENTION

The present invention relates to the technical field of food processing, and more particularly relates to a heating method and a refrigerating and freezing apparatus having a heating unit.

### BACKGROUND OF THE INVENTION

During the freezing process of food, the quality of food is maintained, but frozen food needs to be thawed before processing or consumption. In order to facilitate a user thawing food, electromagnetic wave heating units are usually used to thaw the food.

Thawing food with the electromagnetic wave heating units is not only fast and efficient, but also reduces the loss of nutrients in the food. However, in the prior art, thawing is generally performed based on heating parameters input by a user, or heating parameters are automatically confirmed for thawing according to the food parameters (weight, temperature, size, etc.) detected by a detection device, which either places too high requirements on the user, or increases the production cost of a heating unit, cannot realize precise thawing of food, and leads to the poor quality of the thawed food and even the need of multiple thawing. Considering comprehensively, it is necessary in design to provide a heating method that can achieve precise heating of an object to be processed and prevents same from being overheated, and a refrigerating and freezing apparatus having a heating unit.

CN 108 153 182 B and CN 109 000 419 A disclose respectively a heating method and a refrigerating apparatus according to the prior art.

### BRIEF DESCRIPTION OF THE INVENTION

An object of a first aspect of the present invention is to provide a heating method to overcome at least one of technical defects in the prior art.

A further object of the first aspect of the present invention is to prevent an object to be processed from being overheated.

Another further object of the first aspect of the present invention is to reduce energy consumption.

An object of a second aspect of the present invention to provide a refrigerating and freezing apparatus having a heating unit.

According to the first aspect of the present invention, provided is a heating method including the features of claim 1.

Optionally, the heating unit includes the electromagnetic wave generation module for generating the electromagnetic wave signal, and the cavity capacitor which is electrically connected to the electromagnetic wave generation module and used for accommodating the object to be processed; prior to the step of controlling the heating unit to operate, the heating method further includes:
adjusting the frequency of the electromagnetic wave signal to reduce the reflected wave power returning to the electromagnetic wave generation module; and
determining the initial heating parameter of the heating unit based on the frequency of the electromagnetic wave signal, where
the initial heating parameter include at least one of the heating power, and the termination threshold for terminating the heating procedure.

Optionally, the heating unit is arranged in a storage compartment of a refrigerating and freezing apparatus,
a heating suspension condition includes that a door corresponding to the storage compartment is opened, and
a heating continuation condition includes that the door corresponding to the storage compartment is closed, and a door body of the heating unit does not open or close during the opening and closing of the door.

Optionally, the heating method further includes:
if the door body of the heating unit opens or closes after the heating unit suspends heating, controlling the heating unit to terminate the heating procedure.

Optionally, the heating unit is arranged in the storage compartment of the refrigerating and freezing apparatus, and a door of the refrigerating and freezing apparatus is provided with an interactive unit; prior to the step of controlling the heating unit to operate, the heating method further includes:
if the door body of the heating unit opens or closes during an opening and closing process of the door corresponding to the storage compartment, activating the interactive unit after the door corresponding to the storage compartment is closed, so as to receive a heating command.

Optionally, the heating unit is arranged in the storage compartment of the refrigerating and freezing apparatus, and prior to the step of controlling the heating unit to operate, the heating method further includes:
if the door corresponding to the storage compartment is opened, supplying power to the heating unit; and
if no heating instruction is received within a preset standby time from the time when the door corresponding to the storage compartment is closed, stopping supplying power to the heating unit.

Optionally, prior to the step of controlling the heating unit to operate, the heating method further includes:
if a heating completion condition is met, controlling the heating unit to terminate the heating procedure; and
if the object to be processed is taken out, receiving another heating command again.

Optionally, if the door body of the heating unit is opened, determining that the object to be processed is taken out; and/or
after a preset interval time passes since the heating completion condition is met, executing the step of if the object to be processed is taken out, receiving another heating command again.

According to the second aspect of the present invention, provided is a refrigerating and freezing apparatus, including:
a box body, in which at least one storage compartment is defined;
at least one door, configured to open and close the at least one storage compartment;
a heating unit, configured to heat an object to be processed; and
a controller, configured to execute any of the above the heating method.

The inventors of the present application creatively realize that during the heating process of food, food parameters such as temperature difference between the inside and outside of the food, shape and size of the food, and dielectric properties of the food will all change. If the heating parameters are re-determined by the same method as the initial heating after heating is stopped, a great error may be caused, resulting in excessive heating of the food. According to the present invention, by recording the most recent heating parameter before the heating unit stops heating, and continuing to perform heating according to the recorded heating parameter after heating is resumed, a control process is simplified, and the phenomenon that the object to be processed is overheated according to the re-determined heating parameters is avoided, so that the heating time is shortened, and unnecessary energy consumption is reduced.

Further, the present invention determines the initial heating parameter of the heating unit based on the configuration of the impedance matching module or the frequency of the electromagnetic wave signal. Compared with directly measuring the food parameters of the object to be processed, the present invention saves the cost of additional arrangement of a measuring device, tolerates the errors of the measurement device, obtains feature parameters with higher accuracy, and thus achieves excellent heating effects

Further, by determining the opening and closing of the door of the refrigerating and freezing apparatus and/or the door body of the heating unit, the present invention supplies power to the heating unit, activates the interactive unit, and suspends or terminates the thawing procedure; thus, not only does it not require additional arrangement of a sensing device, which reduces the production cost and energy consumption of the refrigerating and freezing apparatus on the whole, but electromagnetic wave leakage can also be effectively reduced or even avoided, thereby eliminating adverse effects on user health, and improving user experience.

According to the detailed description of specific examples of the present invention below in conjunction with the accompanying drawings, those skilled in the art will more clearly understand the foregoing and other objects, advantages, and features of the present invention.

### BRIEF DESCRIPTION OF THE DRAWINGS

Hereinafter, some specific examples of the present invention will be described in detail in an exemplary and non-limiting manner with reference to the accompanying drawings. The same reference numbers in the drawings indicate the same or similar components or parts. Those skilled in the art will appreciate that these drawings are not necessarily drawn to scale. In the drawings:
FIG. 1 is a schematic structural diagram of a heating unit according to an embodiment of the present invention;
FIG. 2 is a schematic circuit diagram of an impedance matching module in FIG. 1;
FIG. 3 is a schematic cross-sectional view of a refrigerating and freezing apparatus according to an embodiment of the present invention;
FIG. 4 is a schematic flow chart of a heating method according to an embodiment of the present invention;
FIG. 5 is a part of a schematic detailed flow diagram of a heating method according to an embodiment of the present invention;
FIG. 6 is another part of a schematic detailed flow diagram of a heating method according to an embodiment of the present invention;
FIG. 7 is a schematic flow chart of determining an initial heating parameter based on the configuration of the impedance matching module;
FIG. 8 is a schematic flow chart of determining an initial heating parameter based on the frequency of an electromagnetic wave signal.

### DETAILED DESCRIPTION

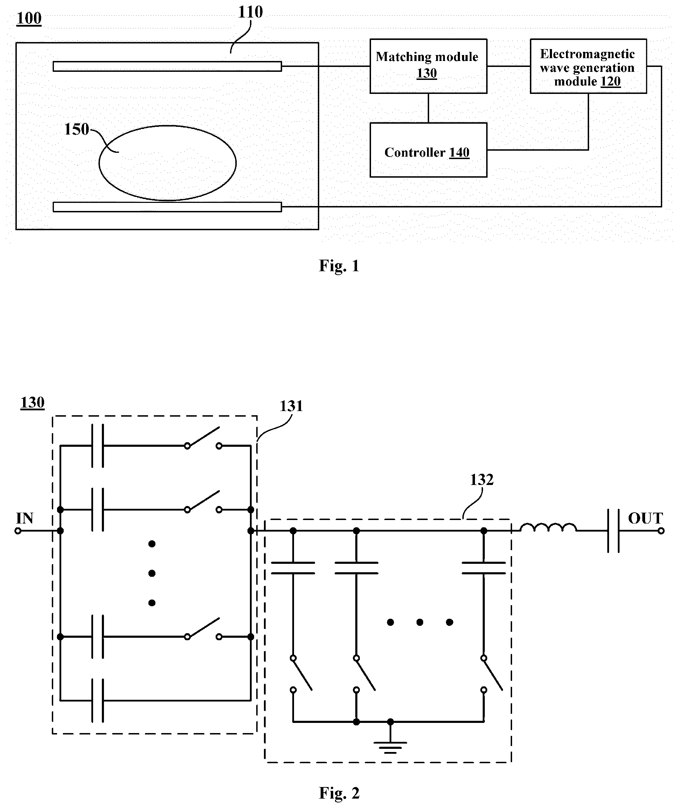

FIG. 1 is a schematic structural diagram of a heating unit 100 according to an embodiment of the present invention. Referring to FIG. 1, the heating unit 100 may include a cavity capacitor 110, an electromagnetic wave generation module 120, and a controller 140.

Specifically, the cavity capacitor 110 may include a cavity 111 for accommodating an object 150 to be processed, and a radiation electrode plate disposed in the cavity 111. In some embodiments, a receiving electrode plate may also be disposed in the cavity 111 to form a capacitor with the radiation electrode plate. In some other embodiments, the cavity 111 may be made of metal to serve as a receiving electrode plate for formation of a capacitor together with the radiation electrode plate.

The cavity capacitor 110 may further include a door body 112 for closing an access opening of the cavity 111 to reduce leakage of electromagnetic waves.

The electromagnetic wave generation module 120 may be configured to generate an electromagnetic wave signal and be electrically connected to the radiation electrode plate of the cavity capacitor 110, so as to generate the electromagnetic waves within the cavity capacitor 110, thereby heating the object 150 to be processed in the cavity capacitor 110.

The controller 140 may include a processing unit and a storage unit, where the storage unit stores a computer program, and the computer program is configured to implement a control method of the embodiment of the present invention when being executed by the processing unit.

In particular, the processing unit may be configured to control the heating unit 100 to operate to heat the object 150 to be processed; when a heating suspension condition is met, a current heating parameter of the heating unit 100 is recorded, and the heating unit 100 is controlled to stop operating; and when a heating continuation condition is met, the heating unit 100 is controlled to continue operating according to the recorded heating parameter.

The inventors of the present application creatively realize that during the heating process of food, food parameters such as temperature difference between the inside and outside of the food, shape and size of the food, and dielectric properties of the food will all change. If the heating parameters are re-determined by the same method as the initial heating after heating is stopped, a great error may be caused, resulting in excessive heating of the food. According to the present invention, the heating unit 100 records the most recent heating parameter before the heating unit 100 stops heating, and heating is continued according to the recorded heating parameter after heating is resumed, which not only simplifies a control process, but also avoids the phenomenon that the object 150 to be processed is overheated according to the re-determined heating parameters, so that the heating time is shortened, and unnecessary energy consumption is reduced.

The initial heating parameter includes at least one of heating power, and a termination threshold for terminating a heating procedure.

The termination threshold may be a total heating time, a change threshold of a dielectric coefficient, and the like. When the heating time of the object 150 to be processed reaches the total heating time and the change rate of the dielectric coefficient of the object 150 to be processed decreases to less than or equal to the change threshold, it is determined that the heating of the object 150 to be processed is completed.

The heating unit 100 further includes an impedance matching module 130. The impedance matching module 130 may be connected in series between the electromagnetic wave generation module 120 and the cavity capacitor 110 or connected in parallel at both ends of the cavity capacitor 110, and is configured to adjust a load impedance of the electromagnetic wave generation module 120 by adjusting its own impedance, so as to achieve load matching and improve heating efficiency.

The processing unit is further configured to determine an initial heating parameter according to the configuration of the impedance matching module 130 prior to the step of controlling the heating unit 100 to operate. That is, by adjusting the configuration of the impedance matching module 130, a reflected wave power returning to the electromagnetic wave generation module 120 is reduced; and the initial heating parameter of the heating unit 100 is determined according to the configuration of the impedance matching module 130, so as to reduce sensing devices, and realize precise heating of the object 150 to be processed.

Specifically, after receiving a heating command, the processing unit controls the electromagnetic wave generation module 120 to generate an electromagnetic wave signal with a preset initial power, adjust the configuration of the impedance matching module 130, determine the configuration of the impedance matching module 130 that achieves a minimum reflected wave power returning to the electromagnetic wave generation module 120, and determine the initial heating parameter according to the configuration of the impedance matching module 130 with the minimum reflected wave power.

In the present invention, the preset initial power may be 10-20W, for example, 10W, 15W or 20W, so as to reduce the impact on the object 150 to be processed, and save energy.

The heating unit 100 may also include a directional coupler connected in series between the cavity capacitor 110 and the electromagnetic wave generation module 120 for monitoring the reflected wave power returning to the electromagnetic wave generation module 120 in real time.

In some further embodiments, the impedance matching module 130 may include multiple matching branches that can be switched on and off independently. The processing unit may be further configured to determine the initial heating parameter according to the on-off combination numbers of the multiple matching branches, so as to shorten the time for determining the initial heating parameter.

The storage unit may store a preset comparison table, which records a corresponding relation between the on-off combination numbers and the initial heating parameters. The processing unit may be configured to match, according to the preset comparison table, the corresponding initial heating parameter based on the on-off combination number that realizes the minimum reflected wave power.

FIG. 2 is a schematic circuit diagram of the impedance matching module 130 in FIG. 1. Referring to FIG. 2, the impedance matching module 130 may include a first matching unit 131 connected in series between the electromagnetic wave generation module 120 and the cavity capacitor 110, and a second matching unit 132, one end of which is electrically connected between the first matching unit 131 and the cavity capacitor 110, and the other end thereof is grounded.

The first matching unit 131 and the second matching unit 132 may respectively include a plurality of matching branches connected in parallel, and each of the matching branches includes a fixed capacitor and a switch, so as to improve the reliability and adjustable range of the impedance matching module 130 while simplifying a circuit. The capacitance values of the plurality of fixed capacitors of the first matching unit 131 and the second matching unit 132 may not be equal.

In other embodiments, the electromagnetic wave generation module 120 may include a frequency source, a power amplifier, and a voltage-controlled oscillator for adjusting an output frequency of the frequency source (a frequency of the electromagnetic wave signal).

The processing unit may be further configured to determine the initial heating parameter according to the frequency of the electromagnetic wave signal prior to the step of controlling the heating unit 100 to operate. That is, by adjusting the frequency of the electromagnetic wave signal, the reflected wave power returning to the electromagnetic wave generation module 120 is reduced; and the initial heating parameter of the heating unit 100 is determined according to the frequency of the electromagnetic wave signal, so as to reduce the sensing devices, and realize precise heating of the object 150 to be processed.

Specifically, after receiving a heating command, the processing unit may control the electromagnetic wave generation module 120 to generate an electromagnetic wave signal with a preset initial power, adjust the frequency of the electromagnetic wave signal, determine the frequency of the electromagnetic wave signal that achieves the minimum reflected wave power returning to the electromagnetic wave generation module 120, and determine the initial heating parameter according to the frequency of the electromagnetic wave signal with the minimum reflected wave power.

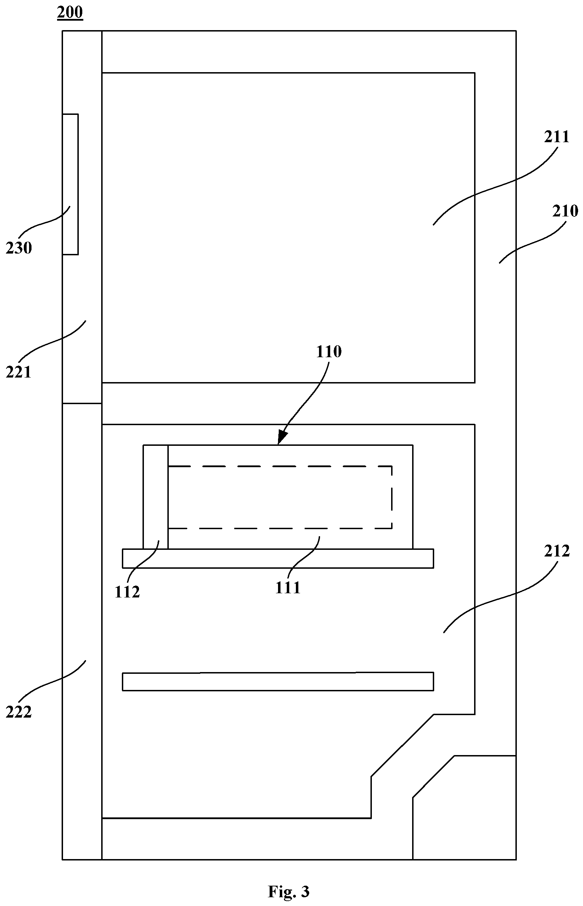

FIG. 3 is a schematic cross-sectional view of a refrigerating and freezing apparatus 200 according to an embodiment of the present invention. Referring to FIG. 3, the present invention also provides a refrigerating and freezing apparatus 200. The refrigerating and freezing apparatus 200 may include a box body 210, in which at least one storage compartment is defined, a door configured to open and close the at least one storage compartment, a refrigeration system that provides cooling capacity to the at least one storage compartment, and a controller 140. In this embodiment, the cavity capacitor 110 of the heating unit 100 may be arranged in a storage compartment; and a part of the controller 140 may be located within the cavity capacitor 110, and is mainly configured to control the operation of the electromagnetic wave generation module 120, the impedance matching module 130, and other devices, and the other part of the controller is located in a compressor compartment or top of the box body 210, and is mainly configured to control the operation of the refrigeration system.

In the illustrated embodiment, the at least one storage compartment may include a refrigerating compartment 211 and a freezing compartment 212 arranged below the refrigerating compartment 211. At least one door may include a refrigerator door 221 for opening and closing the refrigerating compartment 211, and a freezer door 222 for opening and closing the freezing compartment 212. The cavity capacitor 110 may be arranged in the freezing compartment 212 to facilitate a user picking and placing the object 150 to be processed.

The refrigerating and freezing apparatus 200 of the present invention will be described in detail below by taking the arrangement of the cavity capacitor 110 in the freezing compartment 212 as an example.

In some embodiments, the heating suspension condition may include that the freezer door 222 is opened. The heating continuation condition may include that the freezer door 222 is closed, and the door body 112 does not open or close during the opening and closing of the freezer door 222. That is, in a heating process, if the freezer door 222 is opened, the processing unit controls the electromagnetic wave generation module 120 to stop working, so as to reduce or even eliminate the impact of electromagnetic waves on a user; and if the freezer door 222 is closed and the door body 112 does not open or close in this process, the processing unit controls the electromagnetic wave generation module 120 to continue working according to the recorded heating parameter, so as to prevent the object 150 to be processed from being overheated.

The processing unit may be further configured to control the heating unit 100 to terminate the heating procedure if the door body 112 of the heating unit 100 opens or closes after the heating unit 100 suspends heating, that is, to control the electromagnetic wave generation module 120 to stop working, so as to avoid the phenomenon that the electromagnetic wave generation module 120 is damaged due to heating of a cavity when a user takes out the object 150 to be processed.

In some embodiments, the refrigerating and freezing apparatus 200 may also include an interactive unit 230 for receiving a heating command. The interactive unit 230 may be located at one of the doors, e.g., the refrigerator door 221 located on the upper side.

The processing unit may be configured to activate the interactive unit 230 after the freezer door 222 is closed if the door body 112 opens or closes during the opening and closing process of the freezer door 222, and then to receive the heating command, so as to save electric energy and reduce the waiting time of the user.

In some embodiments, in the case where the heating unit 100 is not in a working state, the processing unit may be configured to supply power to the heating unit 100 when the freezer door 222 is opened, so as to save electric energy and quickly start heating.

The heating unit 100 may further include a power supply module configured to receive mains power and supply power to the electromagnetic wave generation module 120 and the electrical devices in the cavity capacitor 110. In the present invention, the supplying power to the heating unit 100 refers to providing electric energy to the power supply module.

The processing unit is further configured to stop supplying power to the heating unit 100 in the case that no heating command is received within a preset standby time from the time when the freezer door 222 is closed, so as to save electric energy.

In some embodiments, during the heating process, the processing unit may be configured to control the heating unit 100 to terminate the heating procedure when a heating completion condition is satisfied, and to receive a heating command again when the object 150 to be processed is taken out, so as to prevent the object 150 to be processed from being repeatedly heated. The heating completion condition may be that the corresponding parameters reach termination thresholds, for example, the heating time of the object 150 to be processed reaches the total heating time, and the change rate of the dielectric coefficient of the object 150 to be processed decreases to less than or equal to the change threshold.

In some further embodiments, the processing unit may be configured to determine that the object 150 to be processed is taken out when the door body 112 is opened, so as to reduce detection devices.

In some further embodiments, the processing unit may be configured to receive a heating command again after a preset interval time passes since the heating completion condition is satisfied, so as to prevent the electromagnetic wave generation module 120 from overheating for a long time and extend the service life of the electromagnetic wave generation module 120.

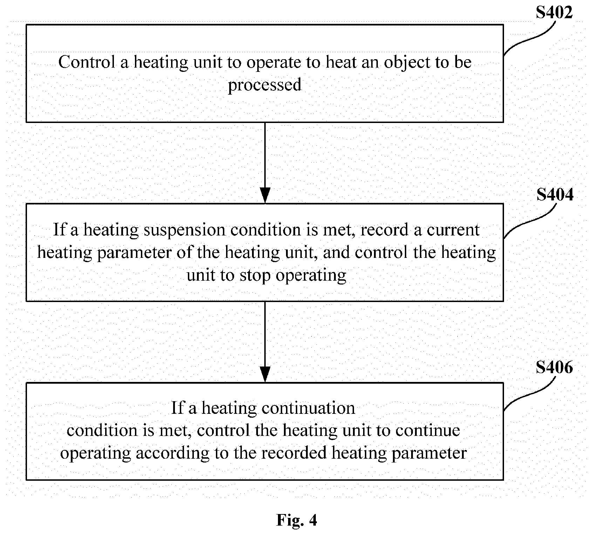

FIG. 4 is a schematic flow chart of a heating method according to an embodiment of the present invention. Referring to FIG. 4, the heating method performed by the controller 140 of any of the above-mentioned embodiments of the present invention may include the following steps:
Step S402: controlling a heating unit 100 to operate to heat an object 150 to be processed;
Step S404: if a heating suspension condition is met, recording a current heating parameter of the heating unit 100, and controlling the heating unit 100 to stop operating; and
Step S406: if a heating continuation condition is met, controlling the heating unit 100 to continue operating according to the recorded heating parameter.

According to heating method provided by the present invention, by recording the most recent heating parameter before the heating unit 100 stops heating, and continuing to perform heating according to the recorded heating parameter after heating is resumed, a control process is simplified, and the phenomenon that the object 150 to be processed is overheated according to re-determined heating parameter is avoided, so that the heating time is shortened, and unnecessary energy consumption is reduced.

In some embodiments, the heating suspension condition may include that a door corresponding to a cavity capacitor 110 is opened. The heating continuation condition may include that the door corresponding to the cavity capacitor 110 is closed, and a door body 112 does not open or close during the opening and closing of the door. That is, in a heating process, if the door corresponding to the cavity capacitor 110 is opened, the processing unit controls an electromagnetic wave generation module 120 to stop working, so as to reduce or even eliminate the influence of electromagnetic waves on a user; and if the door corresponding to the cavity capacitor 110 is closed and the door body 112 does not open or close during this process, the processing unit controls the electromagnetic wave generation module 120 to continue working according to the recorded heating parameter, so as to avoid the object 150 to be processed being excessively heated.

In some further embodiments, the heating method may also include the following steps:
if the door body 112 opens or closes after the heating unit 100 suspends heating, controlling the heating unit 100 to terminate the heating procedure, so as to avoid the phenomenon that the electromagnetic wave generation module 120 is damaged due to heating of a cavity when a user takes out the object 150 to be processed.

In some embodiments, prior to step S402, the heating method may also include:
if the door body 112 opens and closes during the opening and closing process of the door corresponding to the cavity capacitor 110, activating an interactive unit 230 after the door corresponding to the cavity capacitor 110 is closed, and further receiving a heating command, so as to save electric energy and reduce the waiting time of the user.

In some embodiments, prior to step S402, the heating method may also include:
if the door corresponding to the cavity capacitor 110 is opened, supplying power to the heating unit 100 (i.e., supplying power to a power supply module) to save electric energy and quickly start heating; and
if no heating command is received within a preset standby time from the time when the door corresponding to the cavity capacitor 110 is closed, stopping supplying power to the heating unit 100 to save electric energy.

In some embodiments, prior to step S402, the heating method may also include:
adjusting the configuration of an impedance matching module 130 to reduce the reflected wave power returning to the electromagnetic wave generation module 120; and
determining an initial heating parameter of the heating unit 100 based on the configuration of the impedance matching module 130, so as to reduce sensing devices, and realize precise heating of the object 150 to be processed, where the initial heating parameter includes at least one of heating power, and a termination threshold for terminating the heating procedure.

In some embodiments, prior to step S402, the heating method may also include:
adjusting the frequency of an electromagnetic wave signal to reduce the reflected wave power returning to the electromagnetic wave generation module 120; and
determining the initial heating parameter of the heating unit 100 based on the frequency of the electromagnetic wave signal, so as to reduce sensing devices, and realize precise heating of the object 150 to be processed, where the initial heating parameter includes at least one of heating power, and a termination threshold for terminating the heating procedure.

The termination threshold may be a total heating time, a change threshold of a dielectric coefficient, and the like. When the heating time of the object 150 to be processed reaches the total heating time and the change rate of the dielectric coefficient of the object 150 to be processed decreases to less than or equal to the change threshold, it is determined that the heating of the object 150 to be processed is completed.

In some embodiments, after step S402, the heating method may also include:
if a heating completion condition is met, controlling the heating unit 100 to stop working, (where the heating completion condition may be that the corresponding parameter reaches the termination threshold, for example, the heating time of the object 150 to be processed reaches the total heating time, and the change rate of the dielectric coefficient of the object 150 to be processed decreases to less than or equal to the change threshold); and
if the object 150 to be processed is taken out, receiving a heating command again, so as to prevent the object 150 to be processed from being repeatedly heated.

In some further embodiments, the door body 112 of the heating unit 100 is opened, it is determined that the object 150 to be processed is taken out, so as to reduce detection devices.

In some further embodiments, after a preset interval time passes since the heating completion condition is satisfied, the step of if the object 150 to be processed is taken out, receiving a heating command again is performed, so as to prevent the electromagnetic wave generation module 120 from overheating for a long time and extend the service life of the electromagnetic wave generation module 120.

A refrigerating and freezing apparatus 200 provided by the present invention will be described in detail below by taking an example in which the cavity capacitor 110 is arranged in the freezing compartment 212 of the refrigerating and freezing apparatus 200 and the initial heating parameter includes heating power and total heating time.

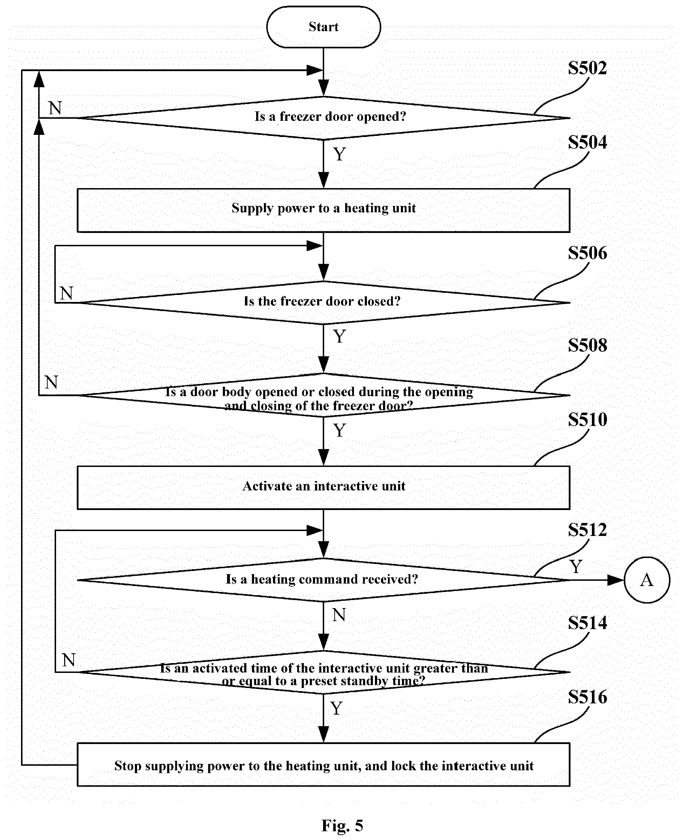

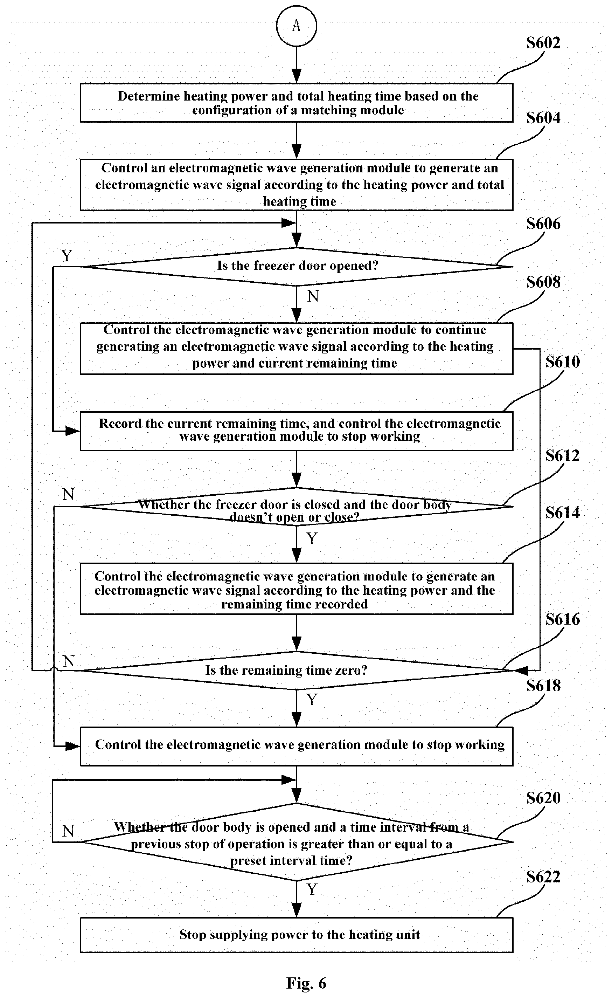

FIG. 5 is a part of a schematic detailed flow diagram of a heating method according to an embodiment of the present invention; and FIG. 6 is another part of a schematic detailed flow diagram of a heating method according to an embodiment of the present invention (where "Y" represents "yes", and "N" represents "no"). In FIG. 5 and FIG. 6, "A" represents a continuation point. Because the method is relatively complicated, and there is difficulty in illustration by a single figure, it is represented in FIG. 5 and FIG. 6, connected by a continuation mark, which can be understood by those skilled in the art. Referring to FIG. 5 and FIG. 6, the heating method provided by the present invention may include following detailed steps:
Step S502: Determining whether a freezer door 222 is opened. If so, proceeding to step S504; and if not, returning to step S502.
Step S504: Supplying power to the heating unit 100.
Step S506: Determining whether the freezer door 222 is closed. If so, proceeding to step S508; and if not, returning to step S506.
Step S508: Determining whether the door body 112 is opened or closed during the opening and closing of the freezer door 222. If so, proceeding to step S510; and if not, returning to step S502.
Step S510: Activating the interactive unit 230.
Step S512: Determining whether a heating command is received. If so, proceeding to step S602; and if not, proceeding to step S514.
Step S514: Determining whether the activated time of the interactive unit 230 is greater than or equal to the preset standby time. If so, proceeding to step S516; and if not, returning to step S512.
Step S516: Stopping supplying power to the heating unit 100, and locking the interactive unit 230.
Step S602: Determining the heating power and total heating time based on the configuration of the matching module 130.
Step S604: Controlling the electromagnetic wave generation module 120 to generate an electromagnetic wave signal according to the heating power and total heating time.
Step S606: Determining whether the freezer door 222 is opened. If so, proceeding to step S610; and if not, proceeding to step S608.
Step 608: Controlling the electromagnetic wave generation module 120 to continue generating an electromagnetic wave signal according to the heating power and current remaining time. Executing step S616.
Step S610: Recording the current remaining time, and controlling the electromagnetic wave generation module 120 to stop working.
Step S612: Determining whether the freezer door 222 is closed and whether the door body 112 does not open or close. If so, proceeding to step S614; and if not, proceeding to step S618.
Step S614: Controlling the electromagnetic wave generation module 120 to generate an electromagnetic wave signal according to the heating power and the remaining time recorded. Executing step S616.
Step S616: Determining whether the remaining time is zero. If so, proceeding to step S618; and if not, returning to step S606.
Step S618: Controlling the electromagnetic wave generation module 120 to stop working.
Step S620: Determining whether the door body 112 is opened and the time interval from the previous stop of operation is greater than or equal to the preset interval time. If so, proceeding to step S622; and if not, returning to step S620.
Step S622: Stopping supplying power to the heating unit 100. Returning to step S502.

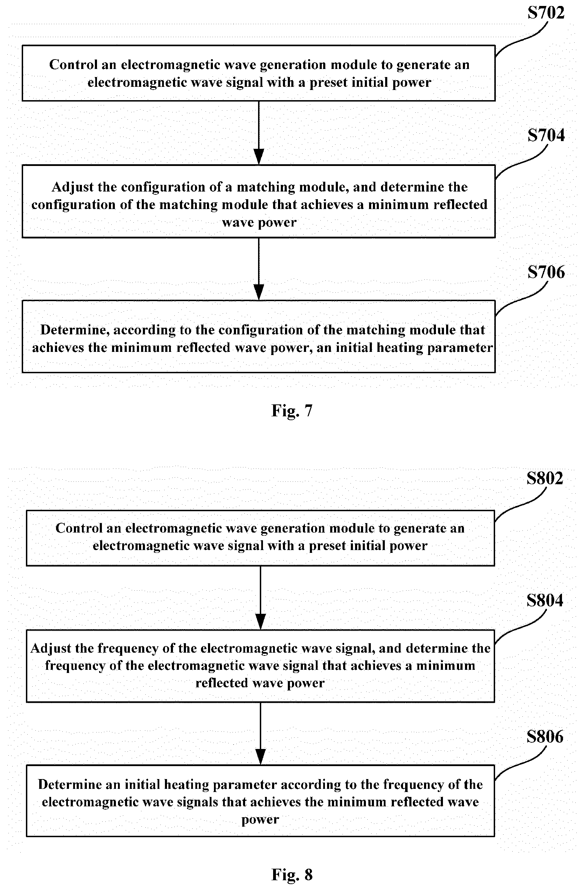

FIG. 7 is a schematic flow chart of determining an initial heating parameter based on the configuration of the impedance matching module 130. Referring to FIG. 7, determining the initial heating parameter based on the configuration of the impedance matching module 130 may specifically include the following steps:
Step S702: Controlling the electromagnetic wave generation module 120 to generate an electromagnetic wave signal with a preset initial power, where the preset initial power may be 10-20W, e.g., 10W, 15W or 20W, so as to reduce the impact on the object 150 to be processed and save energy.
Step S704: Adjusting the configuration of the matching module 130, and determining the configuration of the matching module 130 that achieves a minimum reflected wave power, where the reflected wave power can be measured by a directional coupler connected in series between the cavity capacitor 110 and the electromagnetic wave generation module 120.
Step S706: Determining, according to the configuration of the matching module 130 that achieves the minimum reflected wave power, the initial heating parameter.

FIG. 8 is a schematic flow chart of determining an initial heating parameter based on the frequency of an electromagnetic wave signal. Referring to FIG. 8, determining the initial heating parameter based on the frequency of the electromagnetic wave signal may specifically include the following steps:
Step S802: Controlling the electromagnetic wave generation module 120 to generate an electromagnetic wave signal with a preset initial power, where the preset initial power may be 10-20W, e.g., 10W, 15W or 20W, so as to reduce the impact on the object 150 to be processed and save energy.
Step S804: Adjusting the frequency of the electromagnetic wave signal, and determining the frequency of the electromagnetic wave signal that achieves the minimum reflected wave power, where the reflected wave power can be measured by a directional coupler connected in series between the cavity capacitor 110 and the electromagnetic wave generation module 120.
Step S806: Determining the initial heating parameter according to the frequency of the electromagnetic wave signal that achieves the minimum reflected wave power.

Thus, those skilled in the art should appreciate that, although a number of exemplary examples of the present invention have been shown and described in detail herein, many other variations or modifications consistent with the principles of the present invention can still be directly determined or deduced according to the contents disclosed in the present invention without departing from the scope of the present invention as defined in the claims.

Therefore, the scope of the present invention should be understood and recognized as covering all these other variations or modifications.

## Claims

1. A heating method, comprising:
controlling (S402) a heating unit (100) to operate to heat an object to be processed (150);
if a heating suspension condition is met, recording (S404) a current heating parameter of the heating unit (100), and controlling the heating unit (100) to stop operating; and
if a heating continuation condition is met, controlling (S406) the heating unit (100) to continue operating according to the recorded heating parameter; **characterized in that**
the heating unit (100) comprises an electromagnetic wave generation module (120) for generating an electromagnetic wave signal, a cavity capacitor for accommodating the object to be processed (150), and an impedance matching module (130) connected in series between the electromagnetic wave generation module (120) and the cavity capacitor or in parallel at both ends of the cavity capacitor; prior to the step of controlling (S402) the heating unit (100) to operate, the heating method further comprises:
adjusting the configuration of the impedance matching module (130) to reduce a reflected wave power returning to the electromagnetic wave generation module (120); and
determining an initial heating parameter of the heating unit (100) based on the configuration of the impedance matching module (130), wherein
the initial heating parameter comprises at least one of heating power, and a termination threshold for terminating a heating procedure;
the determining an initial heating parameter of the heating unit (100) based on the configuration of the impedance matching module (130) includes:
controlling (S702) the electromagnetic wave generation module (120) to generate an electromagnetic wave signal with a preset initial power;
adjusting (S704) the configuration of the matching module (130), and determining the configuration of the impedance matching module (130) that achieves a minimum reflected wave power;
determining (S706), according to the configuration of the impedance matching module (130) that achieves the minimum reflected wave power, the initial heating parameter.

2. The heating method according to claim 1, wherein the heating unit (100) comprises an electromagnetic wave generation module (120) for generating an electromagnetic wave signal, and a cavity capacitor which is electrically connected to the electromagnetic wave generation module (120) and used for accommodating the object to be processed (150); prior to the step of controlling (S402) the heating unit (100) to operate, the heating method further comprises:
adjusting the frequency of the electromagnetic wave signal to reduce a reflected wave power returning to the electromagnetic wave generation module (120); and
determining an initial heating parameter of the heating unit (100) based on the frequency of the electromagnetic wave signal, wherein
the initial heating parameter comprises at least one of heating power, and a termination threshold for terminating a heating procedure.

3. The heating method according to any one of claims 1 to 2, wherein the heating unit (100) is arranged in a storage compartment of a refrigerating and freezing apparatus,
the heating suspension condition comprises that a door corresponding to the storage compartment is opened, and
a heating continuation condition comprises that the door corresponding to the storage compartment is closed, and a door body of the heating unit (100) does not open or close during the opening and closing of the door.

4. The heating method according to claim 3, further comprising:
if the door body of the heating unit (100) opens or closes after the heating unit (100) suspends heating, controlling the heating unit (100) to terminate a heating procedure.

5. The heating method according to any one of claims 1 to 4, wherein the heating unit (100) is arranged in a storage compartment of a refrigerating and freezing apparatus, and a door of the refrigerating and freezing apparatus is provided with an interactive unit; prior to the step of controlling the heating unit (100) to operate, the heating method further comprises:
if a door body of the heating unit (100) opens or closes during an opening and closing process of the door corresponding to the storage compartment, activating the interactive unit after the door corresponding to the storage compartment is closed, so as to receive a heating command.

6. The heating method according to any one of claims 1 to 5, wherein the heating unit (100) is arranged in a storage compartment of a refrigerating and freezing apparatus, and prior to the step of controlling the heating unit (100) to operate, the heating method further comprises:
if a door corresponding to the storage compartment is opened, supplying power to the heating unit (100); and
if no heating instruction is received within a preset standby time from the time when the door corresponding to the storage compartment is closed, stopping supplying power to the heating unit (100).

7. The heating method according to any one of claims 1 to 6, wherein prior to the step of controlling the heating unit (100) to operate, the heating method further comprises:
if a heating completion condition is met, controlling the heating unit (100) to terminate a heating procedure; and
if the object to be processed (150) is taken out, receiving another heating command again.

8. The heating method according to claim 7, wherein
if a door body of the heating unit (100) is opened, determining that the object to be processed (150) is taken out; and/or
after a preset interval time passes since the heating completion condition is met, executing the step of if the object to be processed (150) is taken out, receiving another heating command again.

9. A refrigerating and freezing apparatus (200), comprising:
a box body (210), in which at least one storage compartment is defined;
at least one door, configured to open and close the at least one storage compartment;
a heating unit (100), configured to heat an object to be processed (150); and
a controller (140), configured to execute the heating method according to any one of claims 1-8.

## Patentansprüche

1. Heizverfahren, umfassend:
Steuern (S402) einer Heizeinheit (100) zum Betrieb, um ein zu verarbeitendes Objekt (150) zu erhitzen;
Aufzeichnen (S404) eines aktuellen Heizparameters der Heizeinheit (100) und Steuern der Heizeinheit (100), um den Betrieb zu stoppen, wenn eine Heizsuspensionsbedingung erfüllt ist; und
Steuern (S406) der Heizeinheit (100), um den Betrieb gemäß dem aufgezeichneten Heizparameter fortzusetzen, wenn eine Heizfortsetzungsbedingung erfüllt ist; **dadurch gekennzeichnet, dass**
die Heizeinheit (100) ein elektromagnetisches Wellenerzeugungsmodul (120) zum Erzeugen eines elektromagnetischen Wellensignals, einen Hohlraumkondensator zur Aufnahme des zu verarbeitenden Objekts (150), ein Impedanzanpassungsmodul (130) umfasst, das zwischen dem elektromagnetischen Wellenerzeugungsmodul (120) und dem Hohlraumkondensator in Reihe geschaltet oder an beiden Enden des Hohlraumkondensators parallel geschaltet ist; vor dem Schritt des Steuerns (S402) der Heizeinheit (100) zum Betrieb, das Heizverfahren ferner umfasst:
Anpassen der Konfiguration des Impedanzanpassungsmoduls (130) zur Reduzierung einer reflektierten Wellenleistung, die zum elektromagnetischen Wellenerzeugungsmodul (120) zurückkehrt; und
Bestimmen eines anfänglichen Heizparameters der Heizeinheit (100) basierend auf der Konfiguration des Impedanzanpassungsmoduls (130), wobei
der anfängliche Heizparameter mindestens eine der Heizleistung und eine Abbruchschwelle für die Beendigung eines Heizvorgangs umfasst;
Bestimmen eines anfänglichen Heizparameters der Heizeinheit (100) basierend auf der Konfiguration des Impedanzanpassungsmoduls (130) umfasst:
Steuern (S702) des elektromagnetischen Wellenerzeugungsmoduls (120) zum Erzeugen eines elektromagnetischen Wellensignals mit einer voreingestellten Anfangsleistung;
Anpassen (S704) der Konfiguration des Anpassungsmoduls (130) und Bestimmen der Konfiguration des Impedanzanpassungsmoduls (130), das eine minimale reflektierte Wellenleistung erreicht;
Bestimmen (S706) des anfänglichen Heizparameters gemäß der Konfiguration des Impedanzanpassungsmoduls (130), das die minimale reflektierte Wellenleistung erreicht.

2. Heizverfahren nach Anspruch 1, wobei die Heizeinheit (100) ein elektromagnetisches Wellenerzeugungsmodul (120) zum Erzeugen eines elektromagnetischen Wellensignals und einen Hohlraumkondensator umfasst, der mit dem elektromagnetischen Wellenerzeugungsmodul (120) elektrisch verbunden ist und zur Aufnahme des zu verarbeitenden Objekts (150) dient; vor dem Schritt des Steuerns (S402) der Heizeinheit (100) zum Betrieb, das Heizverfahren ferner umfasst:
Anpassen der Frequenz des elektromagnetischen Wellensignals zur Reduzierung einer reflektierten Wellenleistung, die zum elektromagnetischen Wellenerzeugungsmodul (120) zurückkehrt; und
Bestimmen eines anfänglichen Heizparameters der Heizeinheit (100) basierend auf der Frequenz des elektromagnetischen Wellensignals, wobei
der anfängliche Heizparameter mindestens eine der Heizleistung und eine Abbruchschwelle für die Beendigung eines Heizvorgangs umfasst.

3. Heizverfahren nach einem der Ansprüche 1 bis 2, wobei die Heizeinheit (100) in einem Speicherraum einer Kühl- und Gefriervorrichtung angeordnet ist,
wobei die Heizsuspensionsbedingung das Öffnen einer dem Speicherraum entsprechenden Tür umfasst, und
wobei die Heizfortsetzungsbedingung umfasst, dass eine dem Speicherraum entsprechende Tür geschlossen ist und ein Türkörper der Heizeinheit (100) sich während des Öffnens und Schließens der Tür nicht öffnet oder schließt.

4. Heizverfahren gemäß Anspruch 3, ferner umfassend:
Steuern der Heizeinheit (100), um einen Heizvorgang zu beenden, wenn sich der Türkörper der Heizeinheit (100) öffnet oder schließt, nachdem die Heizeinheit (100) das Heizen angehalten hat.

5. Heizverfahren nach einem der Ansprüche 1 bis 4, wobei die Heizeinheit (100) in einem Speicherraum einer Kühl- und Gefriervorrichtung angeordnet ist, und wobei eine Tür der Kühl- und Gefriervorrichtung mit einer Interaktionseinheit versehen ist; vor dem Schritt des Steuerns der Heizeinheit (100) zum Betrieb, das Heizverfahren ferner umfasst:
Aktivieren der Interaktionseinheit, nachdem die dem Speicherraum entsprechende Tür geschlossen wurde, um einen Heizbefehl zu empfangen, wenn ein Türkörper der Heizeinheit (100) während des Öffnungs- und Schließvorgangs der dem Speicherraum entsprechenden Tür geöffnet oder geschlossen wird.

6. Heizverfahren nach einem der Ansprüche 1 bis 5, wobei die Heizeinheit (100) in einem Speicherraum einer Kühl- und Gefriervorrichtung angeordnet ist, und vor dem Schritt des Steuerns der Heizeinheit (100) zum Betrieb, das Heizverfahren ferner umfasst:
Zuführen von Strom an die Heizeinheit (100), wenn eine dem Speicherraum entsprechende Tür geöffnet ist; und
Stoppen der Stromversorgung an die Heizeinheit (100), wenn innerhalb einer voreingestellten Wartezeit ab dem Zeitpunkt, zu dem die dem Speicherraum entsprechende Tür geschlossen wird, keine Heizanweisung empfangen wird.

7. Heizverfahren nach einem der Ansprüche 1 bis 6, wobei vor dem Schritt des Steuerns der Heizeinheit (100) zum Betrieb, das Heizverfahren ferner umfasst:
Steuern der Heizeinheit (100), um einen Heizvorgang zu beenden, wenn eine Heizbeendigungsbedingung erfüllt ist; und
erneutes Empfangen eines weiteren Heizbefehls, wenn das zu verarbeitende Objekt (150) entnommen wird.

8. Heizverfahren gemäß Anspruch 7, wobei
Bestimmen, dass das zu verarbeitende Objekt (150) entnommen wird, wenn ein Türkörper der Heizeinheit (100) geöffnet ist; und/oder
Ausführen des Schrittes des erneuten Empfangens eines weiteren Heizbefehls, wenn das zu verarbeitende Objekt (150) entnommen wird, nachdem ein voreingestelltes Intervall abgelaufen ist, da die Heizbeendigungsbedingung erfüllt ist.

9. Kühl- und Gefriervorrichtung (200), umfassend:
einen Kofferkörper (210), in dem mindestens ein Speicherraum definiert ist;
mindestens eine Tür, die zum Öffnen und Schließen des mindestens einen Speicherraums ausgebildet ist;
eine Heizeinheit (100), die konfiguriert ist, um ein zu verarbeitendes Objekt (150) zu erhitzen;
Steuerung (140), die konfiguriert ist, um das Heizverfahren nach einem der Ansprüche 1 bis 8 durchzuführen

## Revendications

1. Procédé de chauffage, comprenant:
la commande (S402) d'une unité de chauffage (100) pour qu'elle fonctionne afin de chauffer un objet à traiter (150);
si une condition de suspension de chauffage est remplie, l'enregistrement (S404) d'un paramètre de chauffage actuel de l'unité de chauffage (100), et la commande de l'arrêt de fonctionnement de l'unité de chauffage (100); et
si une condition de reprise du chauffage est remplie, la commande (S406) de la reprise du fonctionnemen de l'unité de chauffage (100) selon le paramètre de chauffage enregistré;
**caractérisé en ce que**:
l'unité de chauffage (100) comprend un module de génération d'ondes électromagnétiques (120) pour générer un signal d'onde électromagnétique, un condensateur de cavité pour accueillir l'objet à traiter (150), et un module d'adaptation d'impédance (130) connecté en série entre le module de génération d'ondes électromagnétiques (120) et le condensateur de cavité ou en parallèle aux deux extrémités du condensateur de cavité; avant l'étape de la commande (S402) de l'unité de chauffage (100) pour qu'elle fonctionne, le procédé de chauffage comprend en outre:
l'ajustement de la configuration du module d'adaptation d'impédance (130) pour réduire la puissance des ondes réfléchies retournant au module de génération d'ondes électromagnétiques (120);
la détermination d'un paramètre de chauffage initial de l'unité de chauffage (100) en fonction de la configuration du module d'adaptation d'impédance (130), dans lequel:
le paramètre de chauffage initial comprend au moins l'une d'une puissance de chauffage et un seuil de terminaison pour mettre fin à la procédure de chauffage;
la détermination du paramètre de chauffage initial de l'unité de chauffage (100) en fonction de la configuration du module d'adaptation d'impédance (130) comprend:
la commande (S702) du module de génération d'ondes électromagnétiques (120) pour générer un signal d'onde électromagnétique avec une puissance initiale prédéfinie;
l'ajustement (S704) de la configuration du module d'adaptation (130), et la détermination de la configuration du module d'adaptation d'impédance (130) qui permet d'atteindre une puissance d'onde réfléchie minimale;
la détermination (S706), selon la configuration du module d'adaptation d'impédance (130) qui permet d'atteindre la puissance d'onde réfléchie minimale, du paramètre de chauffage initial.

2. Procédé de chauffage selon la revendication 1, dans lequel l'unité de chauffage (100) comprend un module de génération d'ondes électromagnétiques (120) pour générer un signal d'onde électromagnétique, et un condensateur de cavité qui est connecté électriquement au module de génération d'ondes électromagnétiques (120) et utilisé pour accueillir l'objet à traiter (150); avant l'étape de la commande (S402) de l'unité de chauffage (100) pour qu'elle fonctionne, le procédé de chauffage comprend en outre:
l'ajustement de la fréquence du signal d'onde électromagnétique pour réduire une puissance des ondes réfléchies retournant au module de génération d'ondes électromagnétiques (120);
la détermination du paramètre de chauffage initial de l'unité de chauffage (100) en fonction de la fréquence du signal d'onde électromagnétique, dans lequel:
le paramètre de chauffage initial comprend au moins l'une d'une puissance de chauffage et un seuil de terminaison pour mettre fin à la procédure de chauffage.

3. Procédé de chauffage selon l'une quelconque des revendications 1 à 2, dans lequel l'unité de chauffage (100) est disposée dans un compartiment de stockage d'un appareil de réfrigération et de congélation,
la condition de suspension de chauffage comprend l'ouverture d'une porte correspondant au compartiment de stockage, et
la condition de reprise de chauffage comprend la fermeture de la porte correspondant au compartiment de stockage, et le fait que le corps de porte de l'unité de chauffage (100) ne s'ouvre ni ne se ferme pendant l'ouverture et la fermeture de la porte.

4. Procédé de chauffage selon la revendication 3, comprenant en outre:
si le corps de porte de l'unité de chauffage (100) s'ouvre ou se ferme après que l'unité de chauffage (100) a suspendu le chauffage, la commande de l'unité de chauffage (100) pour mettre fin à la procédure de chauffage.

5. Procédé de chauffage selon l'une quelconque des revendications 1 à 4, dans lequel l'unité de chauffage (100) est disposée dans un compartiment de stockage d'un appareil de réfrigération et de congélation, et une porte de l'appareil de réfrigération et de congélation est pourvue d'une unité interactive; avant l'étape de la commande de l'unité de chauffage (100) pour qu'elle fonctionne, le procédé de chauffage comprend en outre:
si un corps de porte de l'unité de chauffage (100) s'ouvre ou se ferme pendant l'ouverture et la fermeture de la porte correspondant au compartiment de stockage, l'activation de l'unité interactive après la fermeture de la porte correspondant au compartiment de stockage, afin de recevoir une commande de chauffage.

6. Procédé de chauffage selon l'une quelconque des revendications 1 à 5, dans lequel l'unité de chauffage (100) est disposée dans un compartiment de stockage d'un appareil de réfrigération et de congélation, et avant l'étape de la commande de l'unité de chauffage (100) pour qu'elle fonctionne, le procédé de chauffage comprend en outre:
si une porte correspondant au compartiment de stockage est ouverte, l'alimentation en énergie de l'unité de chauffage (100); et
si aucune instruction de chauffage n'est reçue dans un temps de veille prédéfini à partir du moment où la porte correspondant au compartiment de stockage est fermée, l'arrêt de l'alimentation en énergie de l'unité de chauffage (100).

7. Procédé de chauffage selon l'une quelconque des revendications 1 à 6, dans lequel avant l'étape de la commande de l'unité de chauffage (100) pour qu'elle fonctionne, le procédé de chauffage comprend en outre:
si une condition d'achèvement de chauffage est remplie, la commande de l'unité de chauffage (100) pour mettre fin à la procédure de chauffage; et
si l'objet à traiter (150) est retiré, la réception d'une autre commande de chauffage.

8. Procédé de chauffage selon la revendication 7, dans lequel:
si un corps de porte de l'unité de chauffage (100) est ouvert, il est déterminé que l'objet à traiter (150) est retiré; et/ou
après qu'un intervalle de temps prédéfini s'est écoulé depuis que la condition d'achèvement de chauffage est remplie, l'exécution de l'étape de réception d'une autre commande de chauffage si l'objet à traiter (150) est retiré.

9. Un appareil de réfrigération et de congélation (200), comprenant:
un corps de boîtier (210), dans lequel au moins un compartiment de stockage est défini;
au moins une porte, configurée pour ouvrir et fermer le au moins un compartiment de stockage;
une unité de chauffage (100), configurée pour chauffer un objet à traiter (150); et
un contrôleur (140), configuré pour exécuter le procédé de chauffage selon l'une quelconque des revendications 1 à 8.
